Europäisches Patentamt

European Patent Office

Office européen des brevets

(11) Publication number: **0 337 010 B1**

# EUROPEAN PATENT SPECIFICATION

(45) Date of publication of patent specification: **08.01.92**

(51) Int. Cl.⁵: **A23L 2/20**, A23C 3/023, A23C 3/02

(21) Application number: **88116400.8**

(22) Date of filing: **04.10.88**

(54) Method of providing shelf stable liquid food products.

(30) Priority: **11.03.88 CA 561206**

(43) Date of publication of application:
**18.10.89 Bulletin 89/42**

(45) Publication of the grant of the patent:
**08.01.92 Bulletin 92/02**

(84) Designated Contracting States:
**AT BE CH DE ES FR GB GR IT LI LU NL SE**

(56) References cited:
**DE-A- 2 619 073**
**GB-A- 2 062 441**
**GB-A- 2 131 673**

**PATENT ABSTRACTS OF JAPAN vol. 10, no. 144 (C-349) (2201), 27 May 1986**

(73) Proprietor: **FBI BRANDS LTD.**
**16 Chemin Benoit**
**Mt. St.Hilaire Quebec J3G 4S6(CA)**

(72) Inventor: **Poole, Donald A.**
**560 Blackwood Drive**
**Greenfield Park Quebec(CA)**

(74) Representative: **Patentanwälte Deufel, Hertel, Lewald**
**Postfach 26 02 47 Isartorplatz 6**
**W-8000 München 26(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method of providing liquid food products that are shelf stable.

Liquid food products include all fruit juices, drinks, blends of juices in drinks with or without preservatives. Examples are citrus products, such as orange juice and citrus flavoured products with or without preservatives such as sodium benzoate or potassium sorbate, fruit products such as grape, apple or strawberry drinks or juices, vegetable juices and vegetable cocktails. Liquid food products also include dairy products such as milk. Liquid food products include sauces, puddings, custards, syrups and soups. Included also are low alcohol, non-carbonated products such as citrus wine coolers.

A variety of containers have been used including cans, glass, plastic and paperboard cartons.

Although containers of plastic and paperboard are generally less costly than glass containers or cans, there has been a problem of providing plastic or paperboard containers that have adequate shelf life without refrigeration.

Liquid food products are treated in various ways to render them free from microbial contaminants such as yeast mould and bacteria. If products after treatment still contain any of these organisms, spoilage will soon occur. Even if the microorganisms that are in juices or other drinks are controlled by methods such as pasteurization, microwaves, or gamma rays, there is the danger of contamination from the atmosphere or from the empty container during filling.

One method of treatment that is commonly used may be called the "hot fill" method. The product is typically pasturized at about 90°C (195° F). and then filled into containers at 82°C (180° F). to 88°C (190° F)., then the filled containers are sealed, inverted to sterilize the lid with the hot product and cooled to ambient temperatures. Although the hot fill method is widely used it has disadvantages. Specially designed and costly containers are needed because of the temperature at which filling takes place. For example, a six layered carton is commonly used including successive layers of polyethylene, a barrier tie layer, an aluminum foil barrier, another tie layer, paperboard and polyethylene. The barrier tie layer is needed as otherwise there will be delamination between the polyethylene and the foil due to high filling temperatures. The temperature of filling is disadvantageous in the case of some products such as orange juice, which rapidly deteriorates due to oxidation at elevated temperatures to cause rapid degradation of flavour. There is a tendency for foaming and splashing to occur. Perhaps the most serious problem is that after cooling there is a vacuum which means that an extremely tight and effective closure must be used, otherwise air will channel into the interior bringing with it microorganisms which will cause the product to deteriorate. For example, if orange juice is filled by the hot fill method into a gable top paperboard container of the type conventional for milk, the adhesive used in milk cartons to secure the top, and which is releasable to form a pouring spout, would be entirely inadequate to cope with the vacuum following hot filling. The main areas where channelling of air and air borne microorganisms would be likely to occur would be at the centre of the gable top, or through the sides and down at the centre. If, however, a very strong seal is used to avoid channelling it is difficult or impossible for most consumers to open the gable top to form a pouring spout.

The problems of hot filling can be avoided by cold filling. The product is pasteurized to 85°C (185°) - 90°C (195° F). and cooled for filling to ambient temperatures into a non-sterile package. The product must be refrigerated at all times and usually has a two week shelf life. Cold filling may also be used if adequate preservatives are present. The product has a preservative added to it such as sodium benzoate or potassium sorbate. Drinks are stable for three to six months at room temperature but juices should be kept refrigerated as a preservative only prevents microorganisms from growing, it does not kill them. If the initial content of microbes is too high, the preservative will not be able to stop rapid growth and spoilage will occur. A positive feature of preserved technology is the product can be packed into any container. A negative feature is that preservatives used at less than 500 ppm are ineffective and above this level leave a burning taste in the product.

The most recent technology is known as the "aseptic" method. It involves the filling of a presterilized product into a presterilized package under a sterile atmosphere. Product is pasteurized up to 90°C (195°) F. for 15 seconds and cooled to ambient temperature for filling. The package is treated with hydrogen peroxide or steam before filling. The filler is in a room held under positive air pressure. Examples of aseptically filled product can be seen with the "Brick" pack and some shelf stable puddings in plastic containers. This is highly complex technology requiring extensive amounts of capital and maintenance expense and is extremely unforgiving in the event of line problems. Line speeds are generally slow.

Although post pasteurization or sterilization after filling and capping has been used in the brewing trade and for some carbonated drinks containing juices, this has involved glass containers or cans. US patent 4,693,902 and US patent 4,490,401 describe post pasteurization in the brewing trade. Beer is a carbonated beverage and as is evident from US patent 4,693,902, column 7, lines 64-70, hot spot temperatures in the heating zone are reduced from 68°C to 64°C because of concern that a thin walled container, presumably a can which is referred to at column 5, line 41, or glass, will fracture under the pressures which are generated. US patent 4,490,401 clearly shows in column 3 from line 29 on that it only refers to bottles. It is believed that no practical process has been developed for post pasteurization where the containers are of plastic or paperboard coated with plastic.

Our invention utilizes post pasteurization techniques to solve problems inherent in the use of plastic or paperboard containers coated with plastic.

In accordance with one aspect of this invention, a method of providing liquid food products that are shelf stable comprises the steps of:

(a) cold filling a plastic or plastic coated easy opening gable top container with a non-carbonated liquid food product free from pathogenic and thermophilic organisms;

(b) sealing said container;

(c) heating the food product in said container to a pasteurization hold temperature in the range of about 70°C (160°F). to the softening temperature of the plastic;

(d) maintaining the food product at said pasteurization hold temperature to pasteurize the food product;

(e) cooling to provide a liquid food product in any easy opening gable top container that can be opened by hand to give a pouring spout, said liquid product being free from the vacuum condition associated with hot filling.

The liquid food products to which the method of this invention is applicable include non-carbonated fruit products such as the citrus products or citrus flavoured products, fruit products, vegetable juices and vegetable cocktails previously referred to. Carbonation must be avoided as otherwise the pressures that would be generated during the process would be too high.

Another requirement of the food product is freedom from pathogenic and thermophilic bacteria. Most juices and drinks have pH's in the range 2.8 - 4.0 and not above pH 4.6. At a pH above 4.6 there is a potential problem of pathogenic bacteria. Below pH 4.6 the problems are yeast, moulds and bacteria.

If the pH is above 4.6, which would include such products as milk, then there should be a preliminary ultra high temperature treatment at 115°C (240°F). to 127°C (260°F). for 15-20 seconds to kill pathogenic organisms, followed by cooling to ambient temperature. A preliminary ultra high temperature treatment is advisable with some vegetable base products such as tomatokl, due to their initial high content of thermophilic moulds.

The juices and drinks to which this process is applicable are formulated in a tank at ambient temperatures in the range 4°C - 24°C (40° - 75°F). and pretreated as discussed above if necessary. They are then pumped to a filling station where the juice or drink is fed into containers.

Although not essential, it may be useful to provide a sparging infusion valve in the line between the tank and filling station. The sparging infusion valve is used to add up to about 0,7 KN/m² (0.1 lbs/square inch) of nitrogen or carbon dioxide, and preferably about 0,07 KN/m² (0.01 lbs/square inch). The purpose of sparging is to create a slight positive pressure to oppose the entrance of any bacteria into the container after filling. Carbon dioxide is preferred for this purpose. The product sparged with carbon dioxide would have such a small amount of carbon dioxide that it would not be classified as a carbonated product.

At the filling station which is of conventional type, a number of individual containers are filled cold. The temperature of the liquid food product should be less than about 27°C (80°F) and desirably less than 21°C (70°F). to achieve a neutral or positive pressure after filling. This may be contrasted with hot fill temperatures of the order of 82°C (180°F). The maximum temperature that can be used depends on the conditions including the positive pressure from any sparging gas and on the strength of the seal, which in some cases might accept a slight vacuum. However, as previously indicated a vacuum is undesirable. After filling and closing the cartons there should be a neutral to slightly positive pressure.

The containers that are preferred are gable top cartons of paperboard having a barrier layer such as foil and a polyethylene layer in the interior of the carton and another polyethylene layer to bond the foil to the paperboard. The exterior of the carton may also be coated with polyethylene to give a total of five layers. A sixth layer, usual for hot filling methods, is not needed. It is not necessary that a strong seal be used, therefore an easy opening gable top container that can be opened to give a pouring spout that is suitable. Although some of the main benefits of this invention are obtained with easy opening gable top containers, other types of containers such as plastic pouches or plastic bottles may be used in accordance with this invention in its broadest aspect. Suitable plastics for the container also include vinyl resins, such as polyvinyl chloride, regenerated cellulose, polypropylene, polyethylene terephalate, polycarbonates and other plastics that are used for food products. Where a barrier layer is to be used ethyl vinyl alcohol or like barrier film may be substituted for foil.

The cold filled cartons are transferred to a processor comprising three zones, a preheat zone, a hold zone, and a cool zone.

The processor may be in the form of a continuously moving chain upon which rows of cartons are placed. The cartons are spaced to allow water to run down the sides of the cartons to heat or cool the contents.

## 1. Preheat zone

The cold filled cartons are preheated preferably by pouring water at a temperature of 82°C - 85°C (180°F - 185°F). onto the cartons and allowing it to cascade down the sides. After a period of time that varies with the size of the carton, the liquid product within it reaches the desired "pasturization hold" temperature. The preferred temperature for "pasturization hold" is about 75°C (167°F), which will be reached in about 13 - 19 minutes in the case of 1 litre cartons. Two litre cartons would take 20 to 24 minutes to reach this temperature, while 4 to 7 minutes would be adequate for 250 ml. cartons.

## 2. Hold zone.

The product is maintained at the required pasteurization temperature for a predetermined time to ensure adequate kill of all microorganisms. The appropriate time at various "pasteurization hold" temperatures is available from standard texts. At the preferred temperature of 75°C (167°F). a hold time of ten minutes is recommended. The temperature should not be greater than about 79°C (174°F), at which the time will be about 4 minutes, as otherwise there may be problems with softening of the plastic where the container is polyethylene and delamination of foil from paperboard will occur. Slightly higher temperature may be used with plastics having a higher softening point such as polypropylene.

At lower temperatures the hold time is quite long. For example, at 71°C (160°F). it would be about 25 minutes.

## 3. Cool zone

After holding for the required amount of time, the cartons go into a cooling zone and exit at around 32°C (90°F). to 41°C (105°F). This temperature is desirable as it will quickly evaporate off any excess moisture adhering to the container.

The temperature of the cooling water may be about 1°C (35°F). to 16°C (60°F). The cartons then leave the processor and are packed in cases.

This invention is further illustrated by the following examples:

## Example I

This example relates to the production of 4546 ℓ (1000 Imperial gal.) of single strength (ready to drink) orange juice. 614 ℓ (135 gal.) of orange juice concentrate 65 Brix (% soluble solids) is added to 3932 ℓ (865 gal.) of water and blended for 10 minutes. It is then pumped using positive pumps through a line leading to a filler. The line includes a sparging infusion valve to sparge carbon dioxide to give an end product with about 0,07 $KN/m^2$ (0.1 lbs/square inch) of gas. At the filler the carton is filled at a temperature of about 21°C (70°F). into one litre gable top cartons which are heat sealed under pressure. The cartons are brought up to a temperature of 75°C (167°F) in 14 minutes and held at that temperature for ten minutes. They are then chilled with water at 4°C (40°F). for 12 minutes to give an exit temperature of 32°C (90°F). The orange juice has a desirable shelf life of three months and a recommended maximum of six months. The taste of the orange juice is markedly better than that produced by hot filling.

## Example 2

This example relates to a Caesar's clam juice cocktail. A 4546 ℓ (1000 imp. gal.) batch was made of 455 ℓ (100 imp. gal) of tomato paste (32-34 brix) 27,2 kg (60 lbs) of salt; 27,2 kg (60 lbs) of monosodium glutamate; 317,5 kg (700 lbs) of glucose solids; 13,6 kg (30 lbs) of spices and 46 ℓ (10 gal). of clam broth. It is pumped to a pasteurizer where the product is brought to a temperature of 121°C (250°F). in about 10 - 20 seconds, and held at this temperature for 48 to 52 seconds, cooled to 21°C (70°F). and then filled and processed as described in Example 1.

## Claims

1. A method of providing liquid food products that are shelf stable comprising the steps of:

   (a) cold filling a plastic or plastic coated easy opening gable top container with a non-carbonated liquid food product free from pathogenic and thermophilic organisms;

   (b) sealing said container;

   (c) heating the food product in said container to a pasteurization hold temperature in the range of about 71°C (160°F) to the softening temperature of the plastic;

   (d) maintaining the food product at said pasteurization hold temperature to pasteurize the food product;

(e) cooling to provide a liquid food product in any easy opening gable top container that can be opened by hand to give a pouring spout, said liquid product being free from the vacuum condition associated with hot filling.

2. A method as in claim 1 in which the liquid food product is selected from fruit products and vegetable juices.

3. A method as in claim 2 in which the liquid food product is orange juice and the pasteurization hold temperature is in the range of 71°C (160°F) to 79°C (174°F).

4. A method as in claim 2 in which the liquid food product is a clam tomato product.

5. A method as in claims 1, 2 or 3 in which the plastic or plastic coating is polyethylene and the pasteurization hold temperature is in the range 71°C (160°F) to 79°C (174°F).

6. A method as in claim 2 in which the liquid food product is essentially free from artificial preservatives.

7. A method as in claim 6 in which the liquid food product has a shelf life of at least three months.

8. A method as in claims 1, 2 or 3, in which cold filling is at a temperature below 27°C (80°F).

9. A method as in claims 1, 2 or 3, in which the pasteurization hold temperature is about 75°C (167°F).

10. A method as in claims 1, 2 or 3, in which the pasteurization hold temperature is about 75°C (167°F) and the time at that temperature is about 10 minutes.

11. A method as in claims 1, 2 or 3, in which after pasteurization, cooling is to about 32°C (90°F) to 40°F (105°F).

12. A method as in claim 7 in which the liquid food product is citrus juice.

13. A method as in claim 1 in which cold filling is conducted under ambient atmospheric conditions.

14. A method as in claims 1, 2 or 3, including the preliminary step of ultra high temperature treatment to kill any pathogenic or thermophilic organisms followed by cooling.

15. A method as in claim 1, in which the pH of the liquid food product is in the range 3.0 to 4.6.

16. A method as in claim 1, in which the food product is non-alcoholic or has low alcohol.

**Revendications**

1. Procédé pour disposer de produits alimentaires liquides stockables comprenant les étapes consistant à :

(a) remplir à froid un récipient en plastique ou revêtu de plastique à dessus triangulaire à ouverture facile d'un produit alimentaire liquide non gazeux exempt d'organismes pathogènes et thermophiles;

(b) sceller ledit récipient;

(c) chauffer le produit alimentaire dans ledit récipient jusqu'à une température de maintien de pasteurisation dans la plage d'environ 70°C (160°F) jusqu'à la température de ramollissement du plastique;

(d) maintenir le produit alimentaire à ladite température de maintien de pasteurisation afin de pasteuriser le produit alimentaire;

(e) refroidir afin de disposer d'un produit alimentaire liquide dans chaque récipient à dessus triangulaire à ouverture facile qui peut être ouvert manuellement afin de former un bec verseur, ledit produit alimentaire ne subissant pas de vide se produisant avec le remplissage à chaud.

2. Procédé selon la revendication 1 dans lequel le produit alimentaire liquide est sélectionné parmi des produits aux fruits et des jus de légumes.

3. Procédé selon la revendication 2 dans lequel le produit alimentaire liquide est du jus d'orange et la température de maintien de la pasteurisation se situe dans la plage de 71°C (160°F) à 79°C (174°F).

4. Procédé selon la revendication 2 dans lequel le produit alimentaire liquide est un produit à la tomate et aux palourdes.

5. Procédé selon la revendication 1, 2 ou 3 dans lequel le plastique ou le revêtement en plastique est du polyéthylène et la température de maintien de la pasteurisation se situe dans la plage de 71°C (160°F) à 79°C (174°F).

6. Procédé selon la revendication 2 dans lequel le produit alimentaire liquide est sensiblement exempt de conservateurs artificiels.

7. Procédé selon la revendication 6 dans lequel le produit alimentaire liquide peut être stocké pendant au moins trois mois.

8. Procédé selon la revendication 1, 2 ou 3 dans lequel le remplissage à froid est effectué à une température inférieure à 27°C (80°F).

9. Procédé selon la revendication 1, 2 ou 3 dans lequel la température de maintien de la pasteurisation est d'environ 75°C (167°F).

10. Procédé selon la revendication 1, 2 ou 3 dans lequel la température de maintien de la pasteurisation est d'environ 75°C (167°F) et le maintien à cette température est d'environ 10 minutes.

11. Procédé selon la revendication 1, 2 ou 3 dans lequel après la pasteurisation, le refroidissement est effectué à une température comprise entre 32°C (90°F) et 40°C (105°F).

12. Procédé selon la revendication 7 dans lequel le produit alimentaire liquide est du jus d'agrume.

13. Procédé selon la revendication 1 dans lequel le remplissage à froid est effectué dans des conditions de température ambiante.

14. Procédé selon la revendication 1, 2 ou 3 comprenant la phase préliminaire de traitement à ultra haute température pour détruire les organismes pathogènes et thermophiles, suivie d'un refroidissement.

15. Procédé selon la revendication 1 dans lequel le pH du produit alimentaire liquide se situe dans la plage de 3,0 à 4,6.

16. Procédé selon la revendication 1 dans lequel le produit alimentaire n'est pas alcoolisé ou a une faible teneur en alcool.

**Patentansprüche**

1. Verfahren zur Bereitstellung flüssiger Nahrungsmittelprodukte, die lagerstabil sind, das die Schritte enthält:

(a) kaltes Abfüllen eines Plastik- oder plastikbeschichteten leicht zu öffnenden Giebeldachbehälters mit einem nicht mit Kohlensäure versetzten flüssigen Nahrungsmittelprodukt, das frei von pathogenen und thermophilen Organismen ist,
(b) Versiegeln dieses Behälters,
(c) Erwärmen des Nahrungsmittelprodukts in diesem Behälter auf eine Pasteurisierungshaltetemperatur in dem Bereich von etwa 71°C (160°F) auf die Erweichungstemperatur des Kunststoffes,
(d) Halten des Nahrungsmittelprodukts bei dieser Pasteurisierungshaltetemperatur zur Pasteurisierung des Nahrungsmittelprodukts,
(e) Abkühlen zur Bereitstellung eines flüssigen Nahrungsmittelprodukts in jeglichem, leicht zu öffnenden Giebeldachbehälter, der durch Hand geöffnet werden kann, um einen Gießstutzen zu ergeben, wobei das flüssige Produkt frei von dem Vakuumzustand ist, der mit dem Heißabfüllen verbunden ist.

2. Verfahren gemäß Anspruch 1, bei dem das flüssige Nahrungsmittelprodukt ausgewählt ist aus Fruchtprodukten und Gemüsesäften.

3. Verfahren gemäß Anspruch 2, bei dem das flüssige Nahrungsmittelprodukt Orangensaft ist und die Pasteurisierungshaltetemperatur in dem Bereich von 71°C (160°F) bis 79°C (174°F) ist.

4. Verfahren gemäß Anspruch 2, bei dem das flüssige Nahrungsmittelprodukt ein Venusmuschel-Tomatenprodukt ist.

5. Verfahren gemäß den Ansprüchen 1, 2 oder 3, bei dem der Kunststoff oder die Kunststoffbeschichtung Polyethylen ist und die Pasteurisierungshaltetemperatur in dem Bereich von 71°C (160°F) bis 79°C (174°F) liegt.

6. Verfahren gemäß Anspruch 2, bei dem das flüssige Nahrungsmittelprodukt im wesentlichen frei von künstlichen Konservierungsmitteln ist.

7. Verfahren gemäß Anspruch 6, bei dem das flüssige Nahrungsmittelprodukt eine Lagerstabilität von wenigstens 3 Monaten hat.

8. Verfahren gemäß den Ansprüchen 1, 2 oder 3, bei dem das Kaltabfüllen bei einer Temperatur von unterhalb von 27°C (80°F) durchgeführt wird.

9. Verfharen gemäß den Ansprüchen 1, 2 oder 3, bei dem die Pasteurisierungshaltetemperatur über 75°C (167°F) liegt.

10. Verfahren gemäß den Ansprüchen 1, 2 oder 3, bei dem die Pasteuerisierungshaltetemperatur über 75°C (167°F) liegt und die Zeit bei dieser Temperatur über 10 min liegt.

11. Verfahren gemäß den Ansprüchen 1, 2 oder 3, bei dem nach der Pasteuerisierung die Abkühlung auf über 32°C (90°F) bis 40°C (105°F) durchgeführt wird.

12. Verfahren gemäß Anspruch 7, bei dem das flüssige Nahrungsmittelprodukt Zitronensaft ist.

13. Verfahren gemäß Anspruch 1, bei dem das kalte Abfüllen unter umgebenden Atmosphärenbedingungen geführt wird.

14. Verfahren gemäß den Ansprüchen 1, 2 oder 3, das den einleitenden Schritt einer Ultrahochtemperaturbehandlung zum Abtöten von jeglichen pathogenen oder thermophilen Organismen einschließt, gefolgt von Abkühlen.

15. Verfahren gemäß Anspruch 1, in dem der pH des flüssigen Nahrungsmittelprodukts in dem Bereich von 3,0 bis 4,6 liegt.

16. Verfahren gemäß Anspruch 1, bei dem das Nahrungsmittelprodukt nichtalkoholisch ist oder einen niedrigen Alkoholgehalt hat.